# EUROPEAN PATENT APPLICATION

(11) **EP 0 707 418 A1**
(43) Date of publication of application: **17.04.1996**
(21) Application number: 95306868.1
(22) Date of filing: 28.09.1995
(51) Int. Cl.: H04N 3/26

(54) **Raster demodulation apparatus and method**

(30) Priority: 14.10.1994 GB 9420726
(71) Applicant: International Business Machines Corporation, Armonk, N.Y. 10504 (US)
(72) Inventor: Beeteson, John, Skelmorlie, Ayrshire PA17 5DX (GB); Knox, Andrew, Kilbirnie KA25 7JZ (GB)
(74) Representative: Williams, Julian David

(57) **Abstract**

Raster demodulation apparatus for a raster-scanned cathode ray tube display, comprises control means (400) for varying the shape of an scanned electron beam spot scanned by the display in dependence on the raster line density of an image displayed on the display. Because the shape of the electron beam spot is varied in dependence on the raster line density, raster modulation can be reduced to below a noticeable level without impairing overall image quality.

## Description

The present invention relates to a method and apparatus for reducing vertical raster modulation in a raster scanned cathode ray tube (CRT) display.

Electron gun technology in high resolution CRT displays give very small electron beam spots on the CRT screen to provide good resolution in high addressability video formats. An increase in desired addressability stems from the increasing popularity of graphical user interfaces such as the Windows operating system from Microsoft and the OS/2 operating system from IBM. However, displays are also frequently used in more conventional text modes such as the Disk Operating System (DOS) text mode. These older text modes have lower addressibilities, leading to vertical break up of characters when a display with a small electron beam spot size is used. The character break up is generally known as vertical raster modulation. Displays having aperture grille CRTs are particularly susceptible to vertical raster modulation.

In the past, vertical raster modulation has been avoided by "doubling" the pixels in both the horizontal and vertical directions of the raster, thereby doubling the line density of the displayed image. However, many computer graphics adaptors do not have pixel doubling capability. Consequently, when they drive a high resolution display, vertical raster modulation can become noticeable.

In accordance with the present invention, there is now provided raster demodulation apparatus for a raster-scanned cathode ray tube display, the apparatus comprising control means for varying the shape of an scanned electron beam spot scanned by the display in dependence on the raster line density of an image displayed on the display.

Because, in accordance with the present invention the shape of the electron beam spot is varied in dependence on the raster line density, raster modulation can be reduced to below a noticeable level without impairing overall image quality.

Preferably, the control means comprises a detector for determining the raster line density in dependence on raster line and frame synchronisation signals corresponding to the image displayed on the display. The detector enables the demodulator to vary the shape of the electron beam spot in real time.

In a preferred embodiment of the present invention, the detector comprises a switched capacitor low pass filter having a clock input triggered by the line synchronisation signal, a signal input responsive to the frame synchronisation signal, and an output for varying the shape of the scanned electron beam. This embodiment of the present invention is especially attractive because it is relatively inexpensive to implement, involving only a few relatively low cost electrical components.

The detector may comprise: first duty cycle means for converting the line synchronisation signal to a line square wave signal; and second duty cycle means for converting the frame synchronisation signal to a frame square wave signal. This optimises the operation of the switched capacitor filter.

Preferably, the detector comprises an anti-aliasing filter (530) having an input connected to the output of the second duty cycle means and an output connected to the signal input of the switched capacitor filter. This prevents aliasing in the switched capacitor filter.

The detector may comprise a divide by N counter having an input connected to the first duty cycle means and an output connected to the clock input of the switched capacitor filter. The divisor of the counter may be varied under the control of a microprocessor to adjust the response of the filter.

In a particularly preferred embodiment of the present invention, the detector comprises a rectifier for generating a DC voltage control level in response to the output of the filter.

In an especially preferred embodiment of the present invention to be described shortly, the switched capacitor filter is configured as a second order low pass filter.

It will be appreciated that the present invention extends to a cathode ray tube display comprising raster demodulation apparatus as described above.

Viewing the present invention from another aspect, there is now provided a method for reducing raster modulation in a raster-scanned cathode ray tube display, the method comprising varying the shape of an scanned electron beam spot scanned by the display in dependence on the raster line density of an image displayed on the display.

Preferred embodiments of the present invention will now be described, by way of example only, with reference to the accompanying drawings in which:
Figure 1 is a block diagram of an example of a CRT display having a vertical raster demodulator;
Figures 2a and b respectively show unbroken characters and characters affected by vertical raster modulation;
Figures 3a to d are waveform diagrams showing typical electron beam spot profiles;
Figure 4 is a block diagram of an example of a vertical line density detector of the demodulator; and
Figure 5, is a graph of vertical synchronisation signal attenuation in relation to the ratio of vertical sync to filter cut-off frequency corresponding to the detector.

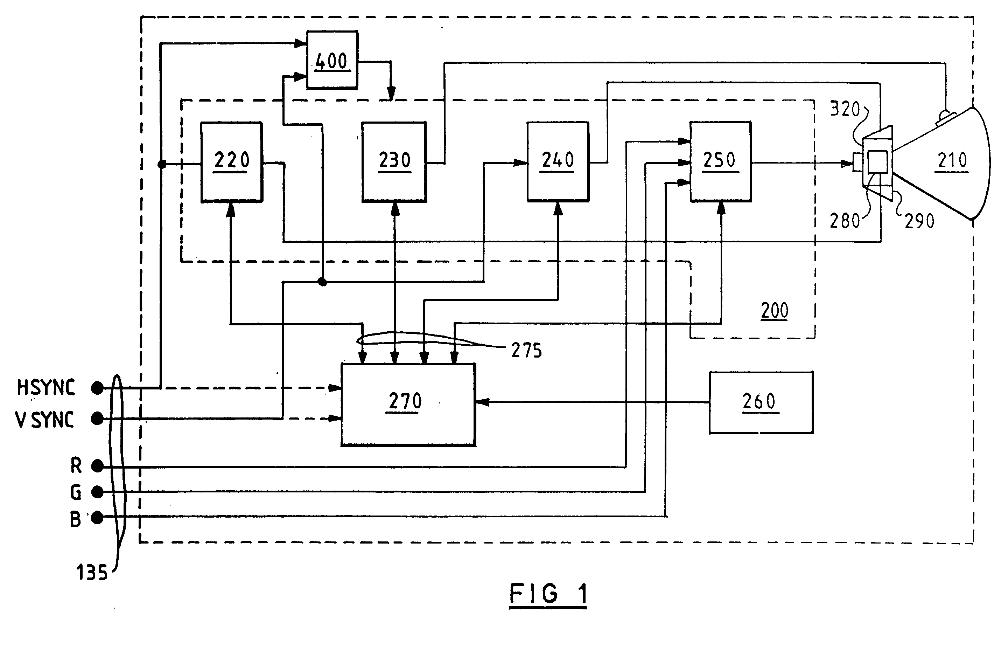

Referring first a Figure 1, a CRT display comprises a colour cathode ray display tube (CRT) display screen 210 having an aperture grille. However, it will be appreciated from the following that the present invention is applicable both displays having aperture grille CRTs and displays having monochrome CRTs. CRT 210 is connected to display drive circuitry 200. Display drive circuitry 200 comprises an Extra High Tension (EHT) generator 230 and a video amplifier 250 connected to display screen 210. Line and frame deflection coils 290 and 280 are disposed around the neck of the CRT on a yoke 320. Deflection coils 290 and 280 are connected to line and frame scan circuits 220 and 240 respectively. Line scan circuit 220 and EHT generator 230 may each be in the form of a flyback circuit, the operation of which is well known by those skilled in the art. Furthermore, as is also well-known in the art, EHT generator 230 and line scan circuit 220 may be integrated in a single flyback circuit. A power supply (not shown) is connected via power supply rails (not shown) to EHT generator 230, video amplifier 250, and line and frame scan circuits 220 and 240. In use, the power supply provides electrical power on the supply rails from Line and Neutral connections (not shown) to the domestic electricity mains supply. The power supply may be in the form of a switch mode power supply, the operation of which is well-understood by those skilled in the art.

EHT generator 230, video amplifier 250, and line and frame scan circuits 220 and 240 are each connected to a display processor 270. Display processor 270 includes a microprocessor. A user control panel 260 is provided on the front of display device 130. Control panel 260 includes a plurality of manual operable switches. User control panel is connected to key-pad interrupt lines of processor 270.

In operation, EHT generator 230 generates an electric field within CRT 210 for accelerating electrons in beams corresponding to the primary colours of red, green and blue towards the screen of CRT. Line and frame scan circuits 220 and 240 generate line and frame scan currents in deflection coils 290 and 280. The line and frame scan currents are in the form of ramp signals to produce time-varying magnetic fields that scan the electron beams across the screen of CRT 210 in a raster pattern. The line and frame scan signals are synchronised by line and frame scan circuits to input line and frame synchronisation (sync) signals HSYNC and VSYNC generated by a video source such as a personal computer system unit, for example. Video amplifier 250 modulates the red, green and blue electron beams to produce an output display on CRT 210 as a function of corresponding red, green and blue input video signals R, G and B also generated by the video source.

Display processor 270 is configured to control the outputs of EHT generator 230, video amplifier 250, and line and frame scan circuits 220 and 240 via control links 275 as functions of preprogrammed display mode data and inputs from user control 260. The display mode data includes sets of preset image parameter values each corresponding to a different popular display mode such as, for example, 1024 X 768 pixels, 640 X 480 pixels, or 1280 X 1024 pixels. Each set of image display parameter values includes height and centring values for setting the output of frame scan circuit 240; and width and centring values for controlling line scan circuit 220. In addition, the display mode data includes common preset image parameter values for controlling the gain and cut-off of each of the red, green and blue channels of video amplifier 250; and preset control values for controlling the outputs of EHT generator 240. The image parameter values are selected by display processor 270 in response to mode information from the video source. Display processor 270 processes the selected image parameter values to generate analog control levels on the control links.

A user can manually adjust, via user control 260, control levels sent from display processor 270 to drive circuity 250 to adjust the geometry of the displayed picture according to personal preference. User control panel 260 includes a set of up/down control keys for each of image height, centring, width, brightness and contrast. Each of the keys controls, via display processor 270, a different one or combination of the control levels, such as those controlling red green and blue video gains and cutoffs at video amplifier 250; and those controlling image width, height, and centring at line and frame scan circuits 220 and 240.

The control keys are preferably in the form of push-buttons connected to key-pad interrupt inputs 320 to display processor 270. When, for example, the width up key is depressed, user control panel 260 issues a corresponding interrupt to display processor 270. The source of the interrupt is determined by display processor 270 via an interrupt polling routine. In response to the interrupt from the width key, display processor 270 progressively increases the corresponding analog control level sent to line scan circuit 220. The width of the image progressively increases. When the desired width is reached, the user releases the key. The removal of the interrupt is detected by display processor 270, and the digital value setting the width control level is retained. The height, centring, brightness and contrast setting can be adjusted by the user in similar fashion. User control panel 260 preferably further includes a store key. When the user depresses the store key, an interrupt is produced to which display processor 270 responds by storing in memory parameter values corresponding the current settings of the digital outputs to D to A convertor as a preferred display format. The user can thus programme into display 130 specific display image parameters according to personal preference. It will be appreciated that, in other embodiments of the present invention, user control panel 260 may be provided in the form of an on-screen menu.

In accordance with the present invention, the display comprises a vertical raster demodulator 400 connected to drive circuitry 200.

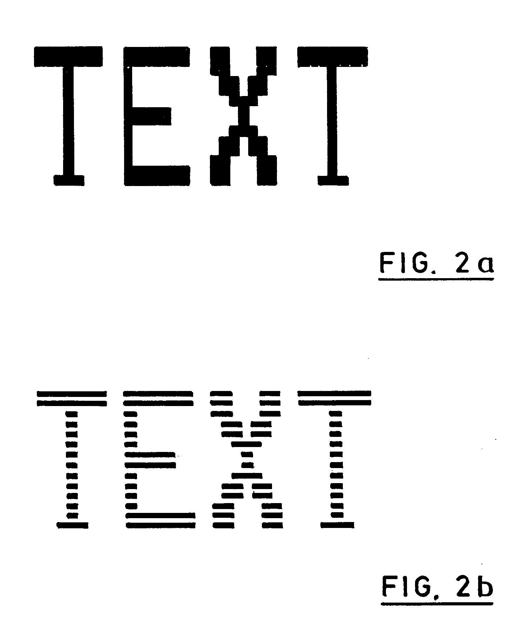

Figure 2a shows a string of characters unaffected by vertical raster modulation. Referring now to Figure 2b, vertical raster modulation has the effect of breaking the characters up in the vertical direction.

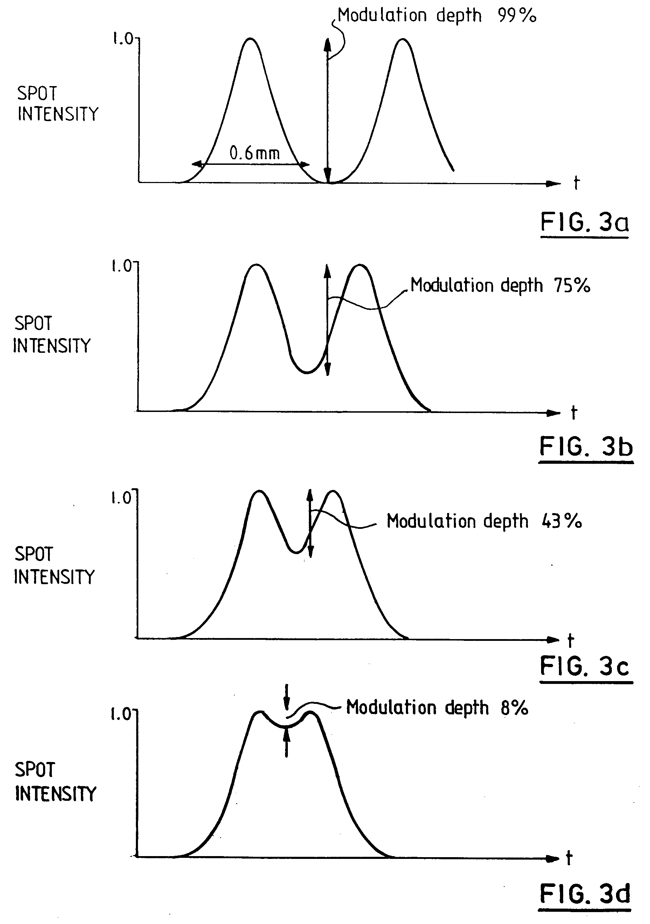

Figures 3a to d show typical electron beam spot profiles for 400 line, 600 line, 768 line and 1024 line rasters respectively. The electron beam spot diameter in each case is measured, as is usual, at the 5 per cent luminance level. For a 21 inch CRT, the diameter is typically 0.6 mm. The image height on the 21 inch CRT in each case is of the order of 300 mm. It will be appreciated from the profiles that modulation depth decreases as vertical line density increases. The actual profile of each spot is Gaussian. The profiles in Figures 3a to d demonstrate summation of spot profiles on overlapping scan lines. The modulation depths apparent from the profiles of Figure 3a to d are well within the limits of detection by the human eye. However, this does not take into account the spatial cut-off frequency of the eye. At high line densities, very close inspection of the displayed image will reveal the modulation. However, at typical viewing distances, the effect is attenuated to such an extent that the image appears "smooth".

In operation, demodulator 400 reduces vertical raster modulation to below a noticeable level without impairing image quality by selectively applying a vertical astigmatism to the electron beam spot in dependence on the raster line density. The line density can be defined by the ratio of the frequencies of the line sync and frame sync signals HSYNC and VSYNC.

If the electron beam spot is made vertically astigmatic, or "stretched" in the vertical direction, the excited phosphor area per scan line increases. Visual inspection of 768 line video format has indicated that performance is then generally acceptable. In a 600 line video format on a high resolution display, some modulation may be visible. In a 480 line video format, modulation tends to be plainly visible. In a 400 line format, modulation is generally unacceptably high.

In a preferred embodiment of the present invention, demodulator 400 comprises a spot shape control system including a dynamic astigmatism control in the electron gun assembly of CRT 210. Spot astigmatism is controlled by the dynamic astigmatism control via focus modulation. In another preferred embodiment of the present invention, demodulator 400 comprises a spot shape control system including a magnetic circuit external to CRT 210 but mounted adjacent the electron gun assembly for varying the shape of the cross section of the electron beams produced by the electron gun assembly.

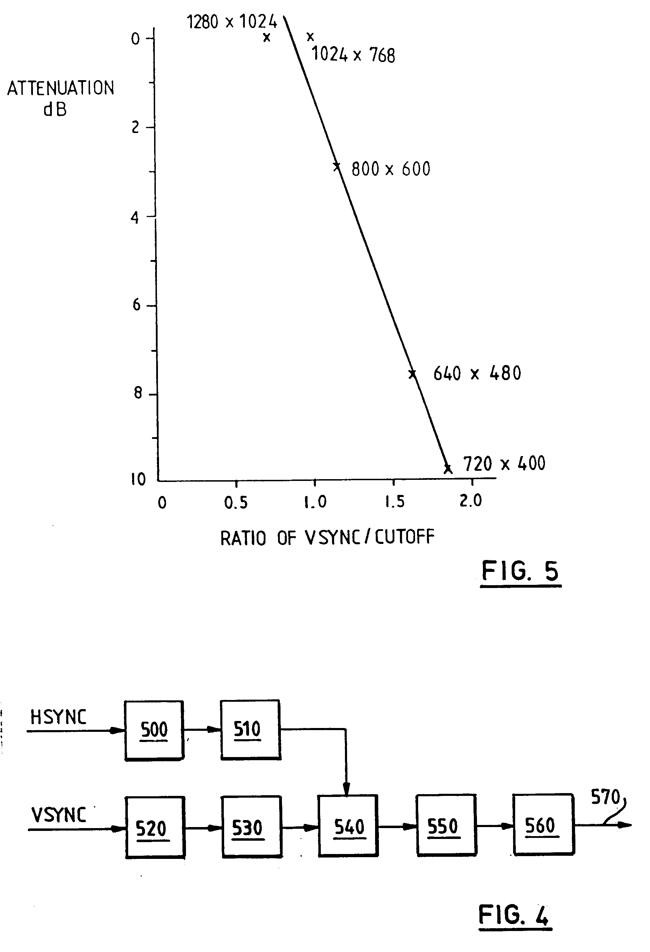

Referring now to Figure 4, an example of a line density detector of demodulator 400 comprises a divide by two flip flop 500 having an input connected to the line sync signal HSYNC. The output of flip flop 500 is connected to the input of a divide by four counter 510. Another divide by two flip flop 520 has an input connected to the frame sync signal VSYNC. The output of flip flop 520 is connected to the input of a low pass filter 530. The output of filter 530 is connected to the input of a switched capacitor filter 540. Filter 540 has a clock input connected to the output of counter 510. The output of filter 540 is connected to the input of an active rectifier circuit 550. The output of rectifier circuit 550 is connected to an invertor 560.

In operation, flip flops 500 and 520 each provide a 50 per cent duty cycle output regardless of the pulse width of their respective input sync signals. The 50 per cent duty cycle permits more accurate operation of filter 540. Furthermore, the harmonic content of a low duty cycle pulse signal is much higher than that of a square wave. Counter 510 reduces the frequency of the output of flip flop 500 to a frequency appropriate for clocking filter 540. Filter 530 has -3dB point set to 100 Hz. This provides anti-aliasing for filter 540. Filter 540 is configured as a second order Butterworth low pass filter with unity pass band gain. The clock to break frequency ration is 200:1. Rectifier 550 converts the output of filter 540 to a DC voltage. The input to invertor 560 is a constant "high" when the frequencies of sync signals HSYNC and VSYNC are such that there is no raster modulation. As the sync ratio falls and the cut-off region of filter 540 is entered, the voltage will fall, indicating that astigmatism control is required. Invertor 560 reverses the sense of the control voltage at 570 to the spot astigmatism control system of demodulator 400. Thus detector output 570 is "low" when inactive and rises according to the degree of spot control required. Invertor 560 may be implemented, for example by a subtracter and a reference voltage. It will be appreciated that in some embodiments of the present invention, invertor 560 may be omitted.

In operation, switched capacitor filter 540 samples the incoming output from filter 530 at the frequency of the output from counter 510. This frequency will hereinafter be referred to as the clock frequency. In the general case, the corner frequency of a switched capacitor filter is a sub-multiple of the clock frequency. In the case of filter 540, the sub-multiple is a factor of 200. The conditions for vertical raster modulation can be detected by comparing the ratios of the line and frame sync signals HSYNC and VSYNC. Filter 540, because of the external clocking, can perform this ratioing without reference to absolute frequency. Filter 540 operates only on the basis of relative frequencies.

However, filter 540 is effectively a sampled data system. To prevent anti-aliasing components above the Nyquist limit, filter 530 is required. Filer 530 may be implemented in the form of a simple RC first order low pass filter. As mentioned earlier, the -3dB point of filter 530 is set at 100 HZ. Thus, with a sampling frequency of 15.75kHz (corresponding to the lowest VGA line rate, for example), any input frequency components at this sampling rate will be attenuated by 20log₁₀(157500/100) = 44dB. The choice of 100 Hz break frequency for filter 530 corresponds to a frame rate of 200 Hz, higher than practical frame frequencies. It will be appreciated that, in other embodiments of the present invention, a higher break point frequency for filter 530 may be selected in event that frame frequencies increase above 200 Hz.

As mentioned earlier flip flop 520 generates a 50 per cent duty cycle output signal from input frame sync signal VSYNC. The frame sync signal is of extremely low (or high depending on the polarity of frame signal VSYNC) duty cycle. The frequency spectrum of a narrow pulse has significantly higher harmonic content than that of a square wave. Thus, flip flop 520 limits the harmonic content of the input to filter 540. For a typical 480 line video format with a frame rate of 60 Hz and line rate of 31.5kHz, the harmonic content at the sampling rate of 15.75kHz is 60/31500 of the fundamental amplitude. This corresponds approximately to -54dB. When passed through filter 530 with another -44dB of gain at this frequency, the total harmonic attenuation is 98dB. This is below the typical noise floor of filter 540. In particularly preferred embodiments of the present invention, flip flop 520 is a CMOS device having a symmetrical current sink/source output stage for driving filter 530.

As mentioned earlier, for optimum operation of filter 540, it is preferable for the clock to have a 50 per cent duty cycle. However, line sync signal HSYNC has the similar format-dependent width variations to those of frame sync signal VSYNC. This problem is solved by flip flop 500.

Following from the theoretical analysis earlier, a line to frame ration of approximately 800 for a 21 inch high resolution display will give a generally satisfactory raster modulation ratio. Below this, separate scan lines will start to become visible. Filter 540 effectively performs a divide by 200 operation which leaves a division by 4 outstanding. Remember that both sync signals HSYNC and VSYNC have been divided by two. Thus there is no ratio change. The divide by four operation is performed by counter 510. Counter 510 may conveniently be implemented by a cascaded pair of flip flops. In other embodiments of the present invention, a division ratio other than 800 may be required. This may be implemented by a phased locked frequency multiplier followed by a counter to perform the required division with the clock provided to filter 540 preferably having a 50 per cent duty cycle. It will be appreciated that the precise division required depends on the CRT image height and spot size. It will also be appreciated that filter 540 may have a clock to break frequency ratio other than 200, in which case it is preferable to transpose counter 510 and flip flop 500 in the signal path of line sync signal HSYNC.

The frequency multiplier and divider for filter clock generation or a variable clock to break frequency ratio permits other control options to be introduced. For example, processor 270 of the display can be configured to adjust the multiplication factor of the multiplier and the divisor of the divider according the image height set by the user control panel 260. Alternatively, a separate raster modulation control may be provided in control panel 260, with processor 270 transferring changes in data to the multipliers and divider. In both examples, the effect of count ration modification is to vary the break frequency of filter 540, thereby providing greater or lesser spot control for a given video format.

As mentioned earlier, filter 540 is configured as a second order low pass filter. However, it will be appreciated that, in other embodiments of the present invention, filter 540 may be configured as a different order filter. The input to filter 540 is a band-limited square wave at approximately TTL levels. For illustration, it will hereinafter be assumed that the filter input amplitude is 4V peak to peak.

Suppose signals corresponding to a 720X400 pixel video format with a line rate of 31.5kHz and a frame rate of 70Hz are applied to the detector. The clock frequency supplied to filter 540 is 3937.5Hz. The -3dB point of filter 540 is thus 19.69Hz. The input to filter 540 has a frequency of 35Hz and an amplitude of 4V. The attenuation provided by filter 540 is thus 40log₁₀(35/19.69) = 10dB. The output signal amplitude from filter 540 is therefore 1.27V peak to peak. This voltage is rectified by rectifier 550 to provide an output DC level of 1.27V.

Suppose now that signals corresponding to a 1280X1024 pixel format with a line rate of 81.78kHz and a frame rate of 77.1Hz are applied to the detector. The clock frequency supplied to filter 540 is 10222.5Hz. The -3dB point of filter 540 is thus 51.1Hz. The input to filter 540 has a frequency of 38.55Hz and an amplitude of 4V. The input to filter 540 is thus well within the pass band. The attenuation provided by filter 540 is thus 0dB. The output signal amplitude from filter 540 is therefore 4V peak to peak. This voltage is rectified by rectified 550 to provide an output DC level of 4V.

Table 1 below provides, by way of example only, data for common video formats between the above examples. It will be appreciated from Table 1 that as the ratio drops below that at which raster modulation become visible, the output from the detector starts to drop proportionally. Above this ratio, the detector has no effect and the spot control system is therefore inactive leaving the image unaltered.

**TABLE 1**

| FORMAT | LINE RATE | FRAME RATE | F_{c} | ATTENUATION | OUTPUT |
|---|---|---|---|---|---|
| 700x400 | 31500Hz | 70Hz | 19.69Hz | 10dB | 1.27V |
| 640x480 | 31500Hz | 60Hz | 19.69Hz | 7.3dB | 1.73V |
| 640x480 | 39400Hz | 75Hz | 24.63Hz | 7.3dB | 1.73V |
| 800x600 | 48000Hz | 72Hz | 30.00Hz | 3.2dB | 2.77V |
| 1024x768 | 61100Hz | 75.8Hz | 38.19Hz | 0.1dB | 3.95V |
| 1280x1024 | 81780Hz | 77.1Hz | 51.1Hz | 0dB | 4.00V |

Comparing lines 1 and 2 of Table 1 shows that with a constant line rate but decreasing frame rate (and hence increasing line density), the degree of spot compensation reduces. Comparing lines 2 and 3 of Table 1, where both line rate and frame rate increase but the format remains at 640x480, the degree of spot compensation is unchanged, consistent with the line density remaining unchanged. Line 5 corresponds to the format at which demodulator 400 ceases spot modification. Note that the attenuation factor is insignificant in line 5. Line 6 corresponds to a video format above the visible raster modulation limit. The frame rate is well below the corner frequency of filter 540. There is no attenuation and thus no spot modulation.

Referring now to Figure 5, depicted therein is a graph of frame sync signal attenuation in relation to the ration of frame sync to cut-off frequency. The data plotted has been normalised so that the break frequency lies at a ration of 1:1. The various video formats in Table 1 are marked. The graph is, as to be expected, indicative of a low pass frequency response.

## Claims

1. Raster demodulation apparatus for a raster-scanned cathode ray tube display, the apparatus comprising control means (400) for varying the shape of an scanned electron beam spot scanned by the display in dependence on the raster line density of an image displayed on the display.

2. Apparatus as claimed in claim 1, wherein the control means comprises a detector for determining the raster line density in dependence on raster line and frame synchronisation signals corresponding to the image displayed on the display.

3. Apparatus as claimed in claim 2, wherein the detector comprises a switched capacitor low pass filter (540) having a clock input triggered by the line synchronisation signal, a signal input responsive to the frame synchronisation signal, and an output for varying the shape of the scanned electron beam.

4. Apparatus as claimed in claim 3, wherein the detector comprises: first duty cycle means (500) for converting the line synchronisation signal to a line square wave signal; and second duty cycle means (520) for converting the frame synchronisation signal to a frame square wave signal.

5. Apparatus as claimed in claim 4, wherein the detector comprises an anti-aliasing filter (530) having an input connected to the output of the second duty cycle means and an output connected to the signal input of the switched capacitor filter.

6. Apparatus as claimed in claim 4, wherein the detector comprises a divide by N counter (510) having an input connected to the first duty cycle means and an output connected to the clock input of the switched capacitor filter.

7. Apparatus as claimed in any preceding claim, wherein the detector comprises a rectifier (550) for generating a DC voltage control level in response to the output of the filter.

8. Apparatus as claimed in any of claims 3 to 7 wherein the switched capacitor filter is configured as a second order low pass filter.

9. A cathode ray tube display comprising raster demodulation apparatus as claimed in any preceding claim.

10. A method for reducing raster modulation in a raster-scanned cathode ray tube display, the method comprising varying the shape of an scanned electron beam spot scanned by the display in dependence on the raster line density of an image displayed on the display.
